# EUROPÄISCHE PATENTSCHRIFT

(11) **EP 2 496 401 B1**
(45) Veröffentlichungstag und Bekanntmachung des Hinweises auf die Patenterteilung: **12.11.2014**
(21) Anmeldenummer: 10765605.0
(22) Anmeldetag: 28.09.2010
(51) Int. Cl.: B29C 65/08, B29C 65/74, G10K 11/18

(54) **VORRICHTUNG UND VERFAHREN ZUM SIEGELN EINER FOLIE**
DEVICE AND METHOD TO SEAL A FILM
APPAREIL ET METHODE POUR SCELLER UN FILM

(30) Priorität: 03.11.2009 DE 102009046319
(43) Veröffentlichungstag der Anmeldung: 12.09.2012
(73) Patentinhaber: Robert Bosch GmbH, 70442 Stuttgart (DE)
(72) Erfinder: WIEDUWILT, Ulrich, 73529 Schwäbisch Gmünd (DE); HEIRINGHOFF, Jens, 48149 Münster (DE)
(86) Internationale Anmeldenummer: PCT/EP2010/064359
(87) Internationale Veröffentlichungsnummer: WO 2011/054605

(56) Entgegenhaltungen:
- EP-A1- 1 510 459
- FR-A- 1 461 900
- FR-A- 1 601 747
- FR-A1- 2 225 247
- JP-A- 2 092 519
- US-A- 3 841 947
- US-A- 5 356 682
- US-A1- 2005 028 916

## Beschreibung

### Stand der Technik

Die vorliegende Erfindung betrifft eine Vorrichtung und ein Verfahren zum Siegeln von Folien mittels Ultraschall.

Folien für Verpackungen zur Aufnahme von flüssigen oder festen Gütern, die mittels Ultraschall gesiegelt und verschlossen werden, sind aus dem Stand der Technik in unterschiedlichen Ausgestaltungen bekannt. Dabei ist die Breite und Form der Siegelnaht der Verpackung von der kostenintensiven Gestaltung und Auslegung der als Schallgeber eingesetzten Sonotrode abhängig.

Aus der JP-2092519 A ist bereits eine Vorrichtung zum Ultraschallsiegeln bekannt, welche bereits eine stempelförmige Sonotrode umfasst.

Aus der EP-A-1510459 ist bereits eine Vorrichtung zum Verschließen von Plastikcontainern bekannt, welches mit Hilfe einer Ultraschallsiegeleinrichtung erfolgt. Aus der FR 2225247 A1 sowie der FR 1601747 A sind ebenfalls Ultraschallsiegelvorrichtungen der gattungsgemäßen Art offenbart.

### Offenbarung der Erfindung

Die erfindungsgemäße Vorrichtung zum Siegeln einer Folie mit den Merkmalen des Anspruchs 1 weist demgegenüber den Vorteil auf, dass die Vorrichtung, die eine Sonotrode und einen Amboss umfasst, durch ein Formatteil gekennzeichnet ist, welches zwischen der Sonotrode und dem Amboss angeordnet ist, wobei das Formatteil derart benachbart zur Sonotrode angeordnet ist, dass die zu siegelnde Folie zwischen das Formatteil und dem Amboss platzierbar ist und wobei die Sonotrode das Formatteil zum Mitschwingen anregt. Auf diese Weise ist ein Siegeln unterschiedlichster Packungsformate unabhängig vom Format der Sonotrode realisierbar. Somit können standardisierte Sonotroden für die Maschine bereitgestellt werden und die Anpassung an das Material und die Oberflächenbeschaffenheit der zumeist mehrlagigen zu siegelnden Folie über das eingesetzte Formatteil erfolgen.

Das Formatteil ist an zwei stabförmigen Bauteilen fixiert. Durch die an einander gegenüberliegenden Seiten der Sonotrode angeordneten stabförmigen Bauteile wird das Formatteil weiter stabilisiert, was sich vorteilhaft auf den Schweißprozess auswirkt. Ferner wird das Aufbringen der Siegelkraft auf die Folie über die gesamte Fläche des Formatteils wesentlich verbessert.

Die Unteransprüche zeigen bevorzugte Weiterbildungen der Erfindung.

Gemäß einer bevorzugten Ausgestaltung der Erfindung berührt das Formatteil die Sonotrode. Somit kann über das Formatteil der Schall von der Sonotrode ohne große Verluste in die Folie eingeleitet und diese über das Formatteil verschweißt werden. Dabei kann die Fläche des Formatteils größer oder kleiner als die Sonotrodenfläche ausgeführt sein.

Weiterhin bevorzugt ist zwischen dem Formatteil und der Sonotrode ein Spalt vorhanden. Mittels des von der Sonotrode erzeugten Ultraschalls wird das Formatteil, um die Ultraschallenergie mit größtmöglichem Wirkungsgrad in die Folie einzuleiten, in Schwingung gebracht. Hierbei wird die Sonotrodenoberfläche zyklisch komprimiert und dekomprimiert und die Schwingungen über die im Spalt befindliche Luft auf das Formatteil übertragen. Vorzugsweise weist in Bewegungsrichtung der Sonotrode der Spalt daher eine Größe auf, welche größer als eine maximale Schwingungsamplitude der Sonotrode ist. Erfindungsgemäß liegt eine Größe des Spalts im Bereich von 20 µm bis 50 µm, vorzugsweise ca. 30 µm. Dadurch wird ein direkter metallischer Kontakt zwischen der Sonotrode und dem Formatteil verhindert, welcher zu einer Beschädigung des Konverters der Sonotrode führen kann. Ferner wird der Verschleiß von Sonotrode und Formatteil reduziert und die Standzeit dieser Bauteile wesentlich verlängert.

Gemäß einer bevorzugten Ausgestaltung der Erfindung ist das Formatteil austauschbar angeordnet. Hierdurch wird ein rascher Austausch des Formatteils ermöglicht und der Zeit- und Kostenaufwand für die Maschinenumrüstung reduziert. Ferner kann dadurch eine einfache und schnelle Nachrüstung einer Siegelvorrichtung erfolgen.

Vorzugsweise weist das Formatteil zudem eine Schneideinrichtung zum Schneiden der Folie auf. Durch das synchron mit dem Siegelvorgang erfolgende Schneiden der Folie kann die Anzahl der Prozessschritte reduziert und der Austauschseite Maschinendurchsatz erhöht werden. Die Schneideinrichtung ist vorzugsweise eine Schneidkante.

Erfindungsgemäß umfasst die Vorrichtung bevorzugt ein zweites Formatteil, welches benachbart zum Amboss angeordnet ist, sodass die zu siegelnde Folie zwischen den beiden Formatteilen platzierbar ist. Durch das zusätzliche zweite Formatteil, das ebenfalls durch den Ultraschall in Schwingung versetzt wird, wird der Schweißvorgang der Folie von der Unterseite unterstützt und die Qualität der hergestellten Siegelnähte wesentlich verbessert. Das zweite Formatteil ist vorzugsweise lose zwischen Amboss und Folie eingelegt, was den Austausch bzw. die Nachrüstung der Bauteile weiter vereinfacht.

Weiterhin betrifft die Erfindung ein Verfahren zum Siegeln einer Folie mittels Ultraschall, wobei eine Sonotrode ein Formatteil zum Schwingen anregt, um die Folie zu siegeln, wobei die Folie zwischen dem Formatteil und einem Amboss angeordnet ist und das Formatteil zwischen der Folie und der Sonotrode angeordnet ist. Erfindungsgemäß ist das Formatteil an zwei an einander gegenüberliegenden Seiten der Sonotrode angeordneten stabförmigen Bauteilen fixiert. Dadurch, dass die Folie durch das in Schwingung versetzte Formatteil gesiegelt wird, ist eine aufwändige und kostenintensive Auslegung und Berechnung der Sonotrode auf die zu siegelnde Fläche und Oberflächenbeschaffenheit der Folie nicht erforderlich. Daher können einheitliche Sonotroden eingesetzt werden, die die Bauteilkosten der Vorrichtung reduzieren. Gemäß einer weiteren bevorzugten Ausgestaltung der Erfindung ist zwischen der Sonotrode und dem Formatteil immer ein Spalt vorhanden und der Spalt ist vorzugsweise verstellbar. Hierdurch wird die Anpassung auf das eingesetzte Formatteil und einen bestimmten standardisierten Sonotroden-Typ sowie auf die Materialbeschaffenheit der zu siegelnden Folie weiter vereinfacht.

### Kurze Beschreibung der Zeichnung

Nachfolgend werden Ausführungsbeispiele der Erfindung unter Bezugnahme auf die begleitende Zeichnung im Detail beschrieben. In der Zeichnung ist:
- Figur 1: eine schematische Ansicht der Vorrichtung zum Siegeln einer Folie gemäß einem ersten Ausführungsbeispiel der Erfindung,
- Figur 2: eine vergrößerte Teilansicht der Vorrichtung von Figur 1, und
- Figur 3: eine schematische Teilansicht der Vorrichtung gemäß einem zweiten Ausführungsbeispiel der Erfindung,

### Ausführungsform der Erfindung

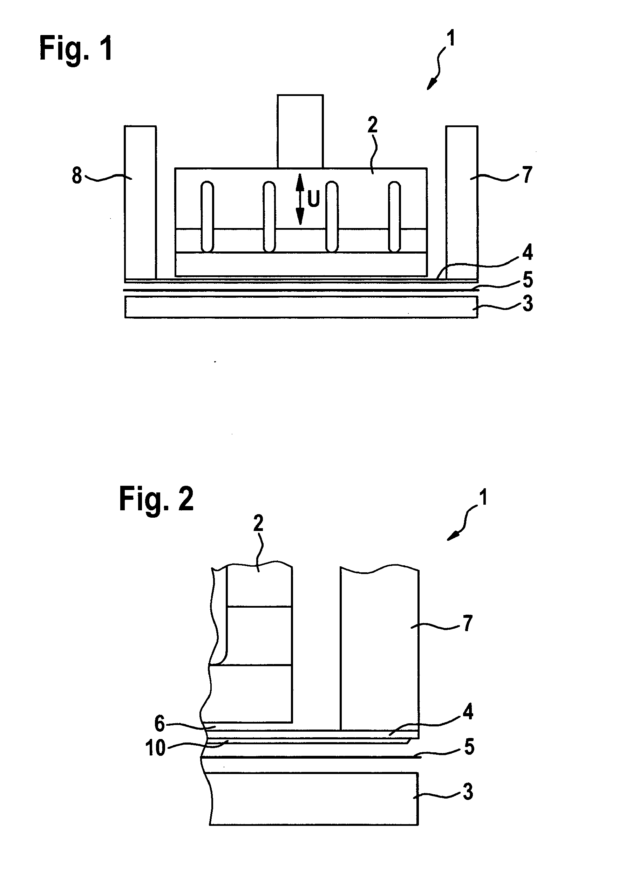

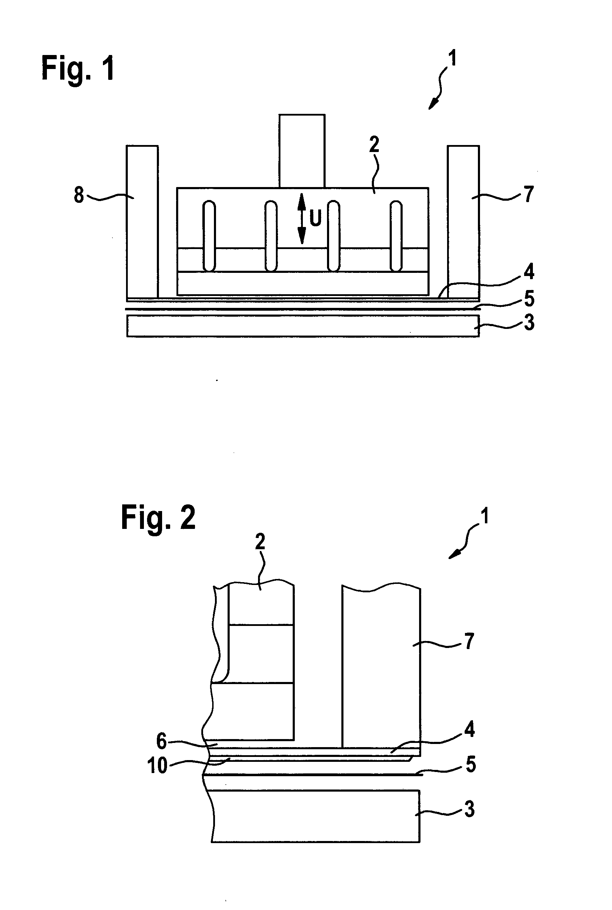

Nachfolgend wird unter Bezugnahme auf die Figur 1 und 2 eine Vorrichtung und ein Verfahren zum Siegeln einer Folie detailliert beschrieben.

Figur 1 zeigt eine schematische Ansicht eines ersten Ausführungsbeispiels der erfindungsgemäßen Vorrichtung 1 zum Siegeln einer Folie 5, die auch mehrlagig ausgebildet sein kann. Wie aus Figur 1 ersichtlich, weist die Vorrichtung 1 eine Sonotrode 2, einen Amboss 3 und ein Formatteil 4 auf, welches zwischen der Sonotrode 2 und dem Amboss 3 angeordnet ist. Der Amboss 5 nimmt die Siegelkräfte auf und fungiert als Gegenlager für den Siegelprozess. Die zu siegelnde Folie 5 ist zwischen dem Formatteil 4 und dem Amboss 3 platziert. Wie aus Figur 1 weiter ersichtlich, ist das Formatteil 4 an zwei stabförmigen Bauteilen 7 und 8 befestigt, die an einander gegenüberliegenden Seiten der Sonotrode 2 vorbeigeführt sind. Dadurch ist das Formatteil 4 als leicht schwingfähiges System aufgehängt.

Gemäß dem erfindungsgemäßen Verfahren erzeugt die Sonotrode 2 Ultraschallschwingungen, die in Figur 1 durch einen Doppelpfeil U symbolisiert dargestellt sind, und regt das benachbart angeordnete Formatteil 4 zum Mitschwingen an. Die in das Formatteil 4 eingeleiteten Ultraschallschwingungen siegeln die zwischen dem Formatteil 4 und dem Amboss 3 platzierte Folie über die Breite und Länge des Formatteils 4. Hierbei liegt das Formatteil 4 flächig unter der Sonotrode 2 und kann größer oder kleiner als die Fläche der Sonotrode 2 ausgebildet sein. Der Siegelvorgang mittels Ultraschall auf der Folie erfolgt hierbei lediglich durch das entsprechend dimensionierte Formatteil 4 und somit unabhängig von der Größe der Sonotrode 2.

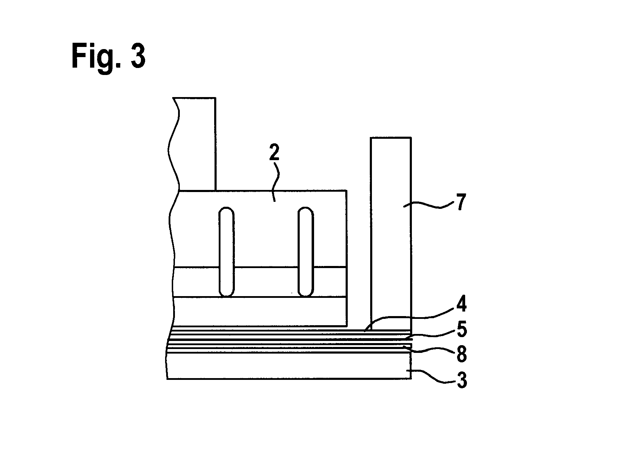

Wie aus Figur 2 ersichtlich, ist zwischen der Sonotrode 2 und dem Formatteil 4 ein Spalt 6 vorhanden, der größer als die maximale Schwingungsamplitude der Sonotrode 2 ausgelegt ist und vorzugsweise im Bereich von 20 µm bis 50 µm liegt. Das Formatteil 4 weist ferner auf der der Folie 5 zugewandten Seite eine Schneidkante 10 zum Schneiden der Folie 5 auf. Dadurch kann eine kompakte Form der Vorrichtung und eine einfache Maschinengeometrie erreicht werden. Nachfolgend wird unter Bezugnahme auf Figur 3 eine Vorrichtung gemäß einem zweiten bevorzugten Ausführungsbeispiel der Erfindung im Detail beschrieben. Gleiche bzw. funktional gleiche Bauteile sind hier mit denselben Bezugszeichen wie im ersten Ausführungsbeispiel bezeichnet.

Im Gegensatz zum zuvor beschriebenen ersten Ausführungsbeispiel weist die Vorrichtung bei diesem zweiten Ausführungsbeispiel ein zweites Formatteil 8 auf, welches benachbart zum Amboss 3 angeordnet ist. Die zu siegelnde Folie 5 ist bei diesem Ausführungsbeispiel zwischen den beiden Formatteilen 4 und 8 platziert. Aufgrund der sandwichartigen Anordnung der Folie 5 zwischen den beiden Formatteilen 4 und 8 wird mit geringem zusätzlichen Bauteil- und Kostenaufwand eine besonders homogene und qualitativ hochwertige Siegelung der Folie 5 erreicht. Das zweite Formatteil 8 ist dabei lose auf den Amboss 3 gelegt und wird beim Siegelvorgang durch die Sonotrode 2 ebenfalls mit angeregt.

## Patentansprüche

1. Vorrichtung zum Siegeln einer Folie (5), umfassend:
- eine Sonotrode (2), und
- einen Amboss (3), sowie
ein Formatteil (4), welches zwischen der Sonotrode (2) und dem Amboss (3) angeordnet ist, wobei das Formatteil (4) derart benachbart zur Sonotrode (2) angeordnet ist, dass die zu siegelnde Folie (5) zwischen das Formatteil (4) und dem Amboss (3) platzierbar ist und wobei die Sonotrode (2) das Formatteil (4) zum Mitschwingen anregt, **dadurch gekennzeichnet, dass** das Formatteil (4) an zwei stabförmigen Bauteilen (7, 8), die an einander gegenüberliegenden Seiten der Sonotrode (2) angeordnet sind, fixiert ist.

2. Vorrichtung nach Anspruch 1, **dadurch gekennzeichnet, dass** das Formatteil (4) die Sonotrode (2) berührt.

3. Vorrichtung nach Anspruch 1, **dadurch gekennzeichnet, dass** zwischen dem Formatteil (4) und der Sonotrode (2) ein Spalt (6) vorhanden ist.

4. Vorrichtung nach Anspruch 3, **dadurch gekennzeichnet, dass** in Bewegungsrichtung der Sonotrode (2) der Spalt (6) eine Größe aufweist, welche größer als eine maximale Schwingungsamplitude der Sonotrode (2) ist.

5. Vorrichtung nach Anspruch 3 oder 4, **dadurch gekennzeichnet, dass** der Spalt (6) eine Größe von 20 µm bis 50 µm aufweist.

6. Vorrichtung nach einem der vorhergehenden Ansprüche, **dadurch gekennzeichnet, dass** das Formatteil (4) austauschbar angeordnet ist.

7. Vorrichtung nach einem der vorhergehenden Ansprüche, **dadurch gekennzeichnet, dass** das Formatteil (4) ferner eine Schneideinrichtung (10) zum Schneiden der Folie (5) aufweist.

8. Vorrichtung nach einem der vorhergehenden Ansprüche, ferner umfassend ein zweites Formatteil (8), welches benachbart zum Amboss (3) angeordnet ist, so dass die zu siegelnde Folie (5) zwischen den beiden Formatteilen (4, 8) platzierbar ist.

9. Verfahren zum Siegeln einer Folie mittels Ultraschall, wobei eine Sonotrode (2) ein Formatteil (4) zum Schwingen anregt, um die Folie (5) zu siegeln, wobei die Folie (5) zwischen dem Formatteil (4) und einem Amboss (3) angeordnet ist und das Formatteil (4) zwischen der Folie (5) und der Sonotrode (2) angeordnet ist, **dadurch gekennzeichnet, dass** das Formatteil (4) an zwei stabförmigen Bauteilen (7, 8), die an einander gegenüberliegenden Seiten der Sonotrode (2) angeordnet sind, fixiert ist.

10. Verfahren nach Anspruch 9, **dadurch gekennzeichnet, dass** das Formatteil (4) die Sonotrode (2) berührt.

11. Verfahren nach Anspruch 9, **dadurch gekennzeichnet, dass** zwischen der Sonotrode (2) und dem Formatteil (4) immer ein Spalt (6) vorhanden ist.

12. Verfahren nach Anspruch 11, **dadurch gekennzeichnet, dass** der Spalt (6) verstellbar ist.

## Claims

1. Device for sealing a film (5), comprising:
- a sonotrode (2), and
- an anvil (3), and
a format portion (4) which is disposed between the sonotrode (2) and the anvil (3), wherein the format portion (4) is disposed so as to be adjacent to the sonotrode (2) in such a manner that the film (5) to be sealed is placeable between the format portion (4) and the anvil (3), and wherein the sonotrode (2) excites the format portion (4) to resonate, **characterized in that** the format portion (4) is fixed on two bar-shaped components (7, 8) which are disposed on sides of the sonotrode (2) which are opposite to one another.

2. Device according to Claim 1, **characterized in that** the format portion (4) touches the sonotrode (2).

3. Device according to Claim 1, **characterized in that** a gap (6) exists between the format portion (4) and the sonotrode (2).

4. Device according to Claim 3, **characterized in that** in the direction of movement of the sonotrode (2) the gap (6) has a size which is larger than a maximum oscillation amplitude of the sonotrode (2).

5. Device according to Claim 3 or 4, **characterized in that** the gap (6) has a size of 20 µm to 50 µm.

6. Device according to one of the preceding claims, **characterized in that** the format portion (4) is disposed so as to be interchangeable.

7. Device according to one of the preceding claims, **characterized in that** the format portion (4) furthermore, has a cutting unit (10) for cutting the film (5).

8. Device according to one of the preceding claims, furthermore comprising a second format portion (8) which is disposed so as to be adjacent to the anvil (3), such that the film (5) to be sealed is placeable between the two format portions (4, 8).

9. Method for sealing a film by ultrasonic means, wherein a sonotrode (2) excites a format portion (4) to resonate in order to seal the film (5), wherein the film (5) is disposed between the format portion (4) and an anvil (3), and the format portion (4) is disposed between the film (5) and the sonotrode (2), **characterized in that** the format portion (4) is fixed on two bar-shaped components (7, 8) which are disposed on sides of the sonotrode (2) which are opposite one another.

10. Method according to Claim 9, **characterized in that** the format portion (4) touches the sonotrode (2).

11. Method according to Claim 9, **characterized in that** a gap (6) always exists between the sonotrode (2) and the format portion (4).

12. Method according to Claim 11, **characterized in that** the gap (6) is adjustable.

## Revendications

1. Dispositif pour sceller une feuille (5), comprenant :
- une sonotrode (2), et
- une enclume (3), ainsi
qu'une pièce de formatage (4) qui est disposée entre la sonotrode (2) et l'enclume (3), la pièce de formatage (4) étant disposée à côté de la sonotrode (2) de telle sorte que la feuille à sceller (5) puisse être placée entre la pièce de formatage (4) et l'enclume (3), la sonotrode (2) excitant la pièce de formatage (4) de manière à ce qu'elle oscille conjointement avec elle, **caractérisé en ce que** la pièce de formatage (4) est fixée au niveau de deux composants en forme de barre (7, 8) qui sont disposés sur des côtés mutuellement opposés de la sonotrode (2).

2. Dispositif selon la revendication 1, **caractérisé en ce que** la pièce de formatage (4) vient en contact avec la sonotrode (2).

3. Dispositif selon la revendication 1, **caractérisé en ce qu'**entre la pièce de formatage (4) et la sonotrode (2) est prévue une fente (6).

4. Dispositif selon la revendication 3, **caractérisé en ce que** dans la direction de déplacement de la sonotrode (2), la fente (6) présente une dimension supérieure à une amplitude d'oscillation maximale de la sonotrode (2).

5. Dispositif selon la revendication 3 ou 4, **caractérisé en ce que** la fente (6) présente une dimension de 20 µm à 50 µm.

6. Dispositif selon l'une quelconque des revendications précédentes, **caractérisé en ce que** la pièce de formatage (4) est disposée de manière remplaçable.

7. Dispositif selon l'une quelconque des revendications précédentes, **caractérisé en ce que** la pièce de formatage (4) présente en outre un dispositif de coupe (10) pour découper la feuille (5).

8. Dispositif selon l'une quelconque des revendications précédentes, comprenant en outre une deuxième pièce de formatage (8) qui est disposée à côté de l'enclume (3), de telle sorte que la feuille à sceller (5) puisse être placée entre les deux pièces de formatage (4, 8).

9. Procédé pour sceller une feuille au moyen d'ultrasons, une sonotrode (2) excitant une pièce de formatage (4) de manière à ce qu'elle oscille afin de sceller la feuille (5), la feuille (5) étant disposée entre la pièce de formatage (4) et une enclume (3) et la pièce de formatage (4) étant disposée entre la feuille (5) et la sonotrode (2), **caractérisé en ce que** la pièce de formatage (4) est fixée au niveau de deux composants en forme de barre (7, 8) qui sont disposés sur des côtés mutuellement opposés de la sonotrode (2).

10. Procédé selon la revendication 9, **caractérisé en ce que** la pièce de formatage (4) vient en contact avec la sonotrode (2).

11. Procédé selon la revendication 9, **caractérisé en ce qu'**entre la sonotrode (2) et la pièce de formatage (4) est toujours prévue une fente (6).

12. Procédé selon la revendication 11, **caractérisé en ce que** la fente (6) est réglable.
